# EUROPEAN PATENT APPLICATION

(11) **EP 2 439 552 A1**
(43) Date of publication of application: **11.04.2012**
(21) Application number: 10275107.0
(22) Date of filing: 06.10.2010
(51) Int. Cl.: G01S 7/292, G01S 7/35, G01S 13/34, G01S 13/58, G01S 7/03, H04B 1/52, G01S 13/26

(54) **Signal processing in a radar system to cancel Tx-Rx-leakage**

(71) Applicant: Astrium Limited, Stevenage, Hertfordshire SG1 2AS (GB)
(72) Inventor: Lancashire, David Charles, Stevenage Hertfordshire SG1 2AS (GB); Helliwell, Alasdair, Stevenage Hertfordshire SG1 2AS (GB)
(74) Representative: Walaski, Jan Filip

(57) **Abstract**

A method of processing a received signal in a radar system is provided, the received signal including an echo signal reflected from an object, and a leakage signal comprising a portion of a transmit signal which travels directly from the transmitter to the receiver of the radar system. The method comprises converting the received signal so that the echo and leakage signals are converted to repeating waveforms, generating a model of the repeating leakage waveform, and subtracting a signal based on the model from the converted received signal to cancel the repeating leakage waveform. In one embodiment, the model comprises a plurality of bins, each storing an exponential running average of the converted received signal over a plurality of repeat periods of the repeating leakage waveform.

## Description

The present invention relates to signal cancellation in a radar system. In particular, the present invention relates to a method of processing a signal in a radar system in order to substantially cancel a leakage signal, the leakage signal comprising a portion of the transmitted signal which travels directly from the transmitter to the receiver.

Radar systems are well-known in the art, and can broadly be divided into pulse radar systems and continuous-wave (CW) systems. A pulse radar system measures a distance to an object by transmitting a short radio-frequency (RF) pulse to an object, and measuring the time taken for the reflected pulse (the echo) to be received. As the velocity of the pulse is known (i.e. the speed of light), it is straightforward to calculate the distance to an object. However, pulse radar systems are not suitable for use at short range, in particular because the pulse length must be reduced as the travel time (i.e. distance to object) decreases. As the pulse length decreases, the energy contained within the pulse decreases, to the point where it becomes impossible to detect the reflected signal. Instead, at short range, continuous-wave radar systems are used.

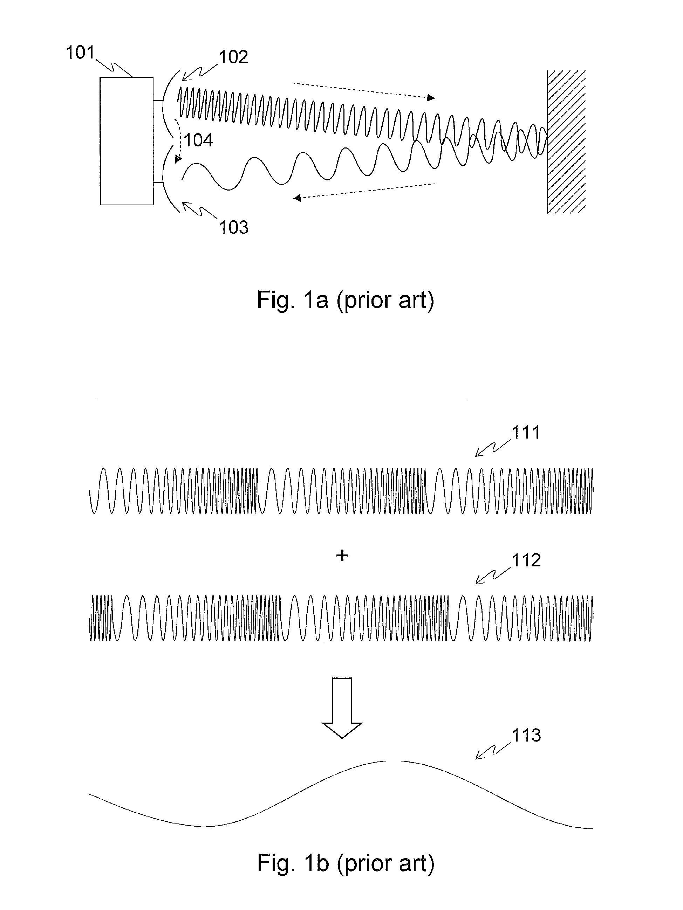

Figure 1a illustrates a conventional frequency-modulated (FMCW) radar system 101 comprising separate transmitter 102 and receiver 103 antennas. The transmitter 102 continuously transmits a sine wave signal which is frequency-modulated by a saw-tooth signal. The received signal is then 'deramped' by mixing with a copy of the transmit waveform. This procedure is illustrated in Fig. 1b. The received signal 112 lags behind the transmit waveform 111 due to the additional time taken for the received signal to travel to and from an object. Accordingly, there is a constant frequency difference between the received signal 112 and the reference waveform 111 (i.e. the copy of the transmit waveform). When the two are mixed, a tone signal 113 of constant frequency is obtained. The frequency of the tone can be used to calculate the distance to the object.

However, because the transmitter 102 and receiver 103 are continuously operating in the conventional FMCW radar system 101, a portion 104 of the transmitted signal leaks directly into the receiver 103. At relatively short ranges the magnitude of the leakage signal may be insignificant in comparison to the magnitude of the reflected signal. However, at long ranges the reflected signal may be extremely weak, and after deramping, the wanted echo tone signal may be swamped by the leakage signal. The conventional FMCW radar system 111 is therefore prevented from operating at long range, since any reflected signals are too weak to be detected.

The present invention aims to address the drawbacks inherent in known arrangements.

According to the present invention, there is provided a method of processing a received signal in a radar system, the received signal including an echo signal reflected from an object and a leakage signal, the leakage signal comprising a portion of a transmit signal which travels directly from a transmitter of the radar system to a receiver of the radar system, the method comprising converting the received signal so that the echo and leakage signals are converted to repeating waveforms, a frequency of the repeating leakage waveform being less than a repetition frequency of the transmit signal, generating a model of the repeating leakage waveform, based on values of the converted received signal over a plurality of repeat periods of the repeating leakage waveform, generating a signal based on the model, and subtracting the signal based on the model from the converted received signal to cancel the repeating leakage waveform.

The method may further comprise normalising the converted received signal, prior to generating the model, and scaling the model according to a continuously averaged value of the converted received signal, prior to subtracting the signal based on the model from the converted received signal.

The model may comprise a plurality of bins, each bin storing a model value corresponding to a different portion of the repeating leakage waveform.

Each model value may be an exponential running average of values of corresponding portions of the converted received signal over a plurality of repeat periods of the repeating leakage waveform, wherein generating the model comprises updating each model value by recalculating the exponential running average based on a current value of a corresponding portion of the converted received signal.

The method may further comprise comparing a current power of the converted received signal to an estimated mean power of the converted received signal, and determining whether to update the model based on the result of said comparison.

Comparing a current power of the converted received signal to an estimated mean power of the converted received signal may comprise calculating a ratio of the current power to the estimated mean power, and determining whether to update the model may comprise determining whether said ratio is within a predetermined acceptable range.

Determining whether to update the model may comprise counting a number of samples that lie within said predetermined acceptable range for a single repeat period of the repeating leakage waveform, and updating the model if said number of samples exceeds a threshold value.

The estimated mean power may be calculated as a mean power of the converted received signal over a plurality of repeat periods of the repeating leakage waveform.

Converting the received signal may comprise deramping the received signal by mixing the received signal with a copy of the transmit signal.

The repeating leakage waveform may have a frequency close to 0 Hz, and may have a repetition frequency which is the same as the repetition frequency of the transmit signal.

The converted leakage signal and the converted echo signal may each have a constant frequency.

According to the present invention, there is also provided apparatus for processing a received signal in a radar system, the received signal including an echo signal reflected from an object and a leakage signal, the leakage signal comprising a portion of a transmit signal which travels directly from a transmitter of the radar system to a receiver of the radar system, the apparatus comprising means for converting the received signal so that the echo and leakage signals are converted to repeating waveforms, a frequency of the repeating leakage waveform being less than a repetition frequency of the transmit signal, and signal processing means configured to generate a model of the repeating leakage waveform, based on values of the converted received signal over a plurality of repeat periods of the repeating leakage waveform, generate a signal based on the model, and subtract the signal based on the model from the converted received signal to cancel the repeating leakage waveform.

The signal processing means may be further configured to normalise the converted received signal prior to generating the model, and scale the model according to a current value of the converted received signal.

The apparatus may be included in a radar system comprising a transmitter configured to continuously transmit a transmit signal, and a receiver configured to receive a signal including an echo signal and a leakage signal, the echo signal comprising a portion of the transmitted signal which is reflected from an object, and the leakage signal comprising a portion of the transmit signal which travels directly from the transmitter to the receiver.

The radar system may further comprise means for calculating velocity and/or distance information about the object, after subtracting the signal based on the model from the converted received signal.

Embodiments of the invention will now be described, by way of example, with reference to the accompanying drawings, in which:
Figures 1a and 1b illustrate conventional radar systems;
Figures 2a and 2b illustrate a radar system according to an embodiment of the present invention;
Figure 3 illustrates a received signal including both an echo signal and a leakage signal, according to an embodiment of the present invention;
Figure 4 illustrates a reference waveform corresponding to the received signal of Fig. 3;
Figure 5 illustrates a deramped signal obtained by mixing the received signal of Fig. 3 with the reference waveform of Fig. 4;
Figure 6 illustrates a blanked signal obtained by blanking transients in the deramped signal of Fig. 5;
Figure 7 illustrates a normalised waveform corresponding to the blanked signal of Fig. 6;
Figure 8 illustrates a model waveform corresponding to the blanked signal of Fig. 6;
Figure 9 illustrates a flowchart showing a method of processing a signal comprising a repeating waveform, according to an embodiment of the present invention;
Figure 10 illustrates a cancelled deramped signal obtained soon after activation of a radar system, according to an embodiment of the present invention;
Figure 11 illustrates the cancelled deramped signal of Fig. 10, after convergence of the mean Q and I values;
Figure 12 illustrates the cancelled deramped signal of Fig. 11, with the vertical scale expanded;
Figure 13 illustrates a recovered deramped echo signal obtained by cancelling a leakage signal in a deramped signal, according to an embodiment of the present invention;
Figure 14 illustrates a method for cancelling a leakage signal to recover a low-level echo signal in a radar system, according to an embodiment of the present invention; and
Figure 15 illustrates a method for determining whether to update a model waveform, according to an embodiment of the present invention.

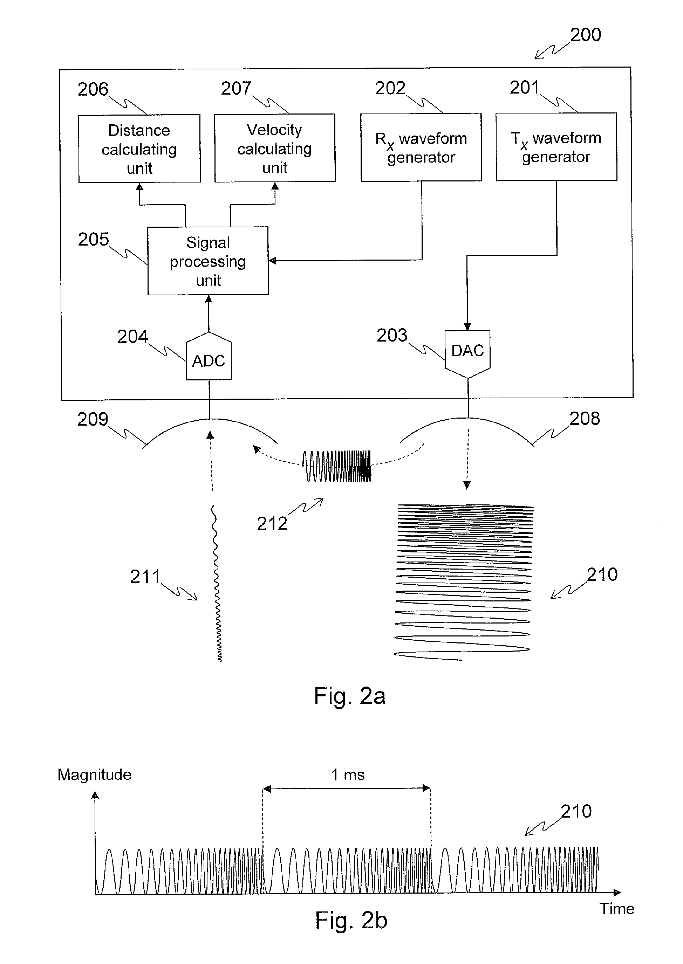

Referring now to Figs. 2a and 2b, a radar system is schematically illustrated according to an embodiment of the present invention. The system 200 comprises a T*_{X}* waveform generator 201, an R*_{X}* waveform generator 202, a digital-to-analogue converter DAC 203, an analogue-to-digital converter ADC 204, a signal processing unit 205, a distance calculating unit 206, a velocity calculating unit 207, a transmitter antenna 208 and a receiver antenna 209. As shown in Fig. 2a, the transmitter 208 transmits a frequency-modulated transmit signal 210 towards a target (not shown), and the receiver 209 receives an echo signal 211 from the target. However, the receiver 209 also receives a leakage signal 212 corresponding to a portion of the transmit signal 210 which leaks directly from the transmitter 208. The echo signal 211 may be very faint compared to the leakage signal 212, i.e. may be significantly lower in magnitude than the leakage signal 212. In Fig. 2a, the waveforms of the transmit signal 210, the echo signal 211, and the leakage signal 212 are provided for illustrative purposes only, and may not be to scale.

In certain situations, for example when the echo signal 211 has been reflected by an object a large distance from the radar system 200, after deramping the received signal the deramped leakage signal 212 may swamp any echo tone signal and prevent the echo tone signal from being detected. In more detail, when the received signal and a reference signal (copy of the transmit waveform) are mixed during deramping, a signal is obtained which corresponds to a difference in frequency between the received signal and the reference signal. However, the leakage signal effectively corresponds to the reference signal (i.e. is not delayed), since the time taken for the leakage signal to travel between the transmitter and receiver is insignificant. Therefore at any given point, the leakage signal will be very close in frequency to the reference signal, and so during deramping, the leakage signal mixes down to a near-DC signal (i.e. having a frequency very close to zero Hz). Because the magnitude of the leakage signal is significant in comparison to the echo signal, the near-DC deramped leakage signal may completely swamp the tone signal that would normally be obtained, and hence may make range detection impossible at long range. For example, the deramped echo signal (i.e. the tone signal) may be several orders of magnitude lower than the deramped leakage signal.

A possible method to selectively remove the unwanted signal (i.e. the deramped leakage signal) would be to apply a narrow band rejection filter centred on 0Hz. However, such an approach has two limitations. Firstly, the filter length, and hence its frequency roll off, is limited to the length of an FM pulse repeat because of inherent discontinuities at pulse boundaries. Secondly, the echo signal may have been Doppler shifted in frequency giving a final deramped frequency close to zero.

In the present embodiment, instead of using a narrow band filter to remove the unwanted signal, the system 200 is configured to process the deramped signal in order to substantially cancel the deramped leakage signal (i.e. the near-DC signal obtained when the leakage signal is mixed with a copy of the transmit waveform). The received signal comprises both the echo signal 211 and the leakage signal 212, and by cancelling out the deramped leakage signal, it is possible to recover the deramped echo signal (i.e. the tone signal, cf. Fig. 1b). The deramped echo signal can then be used to calculate distance and velocity information about an object from which the echo signal 211 was reflected.

The cancelation method of the present embodiment makes use of the repetitive nature of the waveform to perform discrimination from the echo over many waveform repeats, so allowing sharper separation than is possible with a filter. Additionally, the system 200 can remember the essentially constant leakage signal, and hence cancelation can continue even during periods when the echo signal is Doppler shifted to OHz.

As shown in Fig. 2a, the radar system 200 comprises a T*_{X}* waveform generator 201 and an Rₓ waveform generator 202. The T*_{X}* waveform generator 201 is configured to generate the transmit signal 210, which comprises a sine wave whose frequency is modulated according to a saw-tooth signal. As shown in Fig. 2b, in the present embodiment, the saw-tooth signal has a waveform repeat rate of 1 kHz, and hence the transmit signal 210 comprises a series of pulses which repeat at a rate of 1 kHz and have a width of 1 ms. However, in other embodiments, alternative frequencies and pulse widths may be used.

The T*_{X}* waveform generator 201 generates the transmit signal 210 as a digital signal, which is then converted into an analogue signal by the DAC 203 and transmitted via the transmitter 208. The Rₓ waveform generator 202 may be substantially similar or identical to the T*_{X}* waveform generator 201, and is configured to generate a reference (R*_{X}*) waveform which is identical to that of the transmit signal 210, but delayed with respect to the transmit signal 210. A value of this R*_{X}* delay is determined during calibration of the system.

In more detail, the received echo signal 211 is delayed with respect to the transmit signal 210 as a result of the distance travelled by the echo signal 211. However, an additional internal delay is introduced by system components such as the ADC 204. During calibration, the R*_{X}* delay is adjusted so that the leakage signal is deramped to DC. A consequence of setting the delay in this manner is that the R*_{X}* delay accurately compensates for the internal delay, by ensuring that the R*_{X}* waveform is synchronised with the leakage signal (the time taken for the leakage signal to travel between the transmitter and receiver is negligible). Therefore, during deramping, any difference in timing between the received signal and the reference waveform may be attributed solely to the distance travelled by the received signal, because the internal delay is compensated by the applied R*_{X}* delay.

Means for delaying the reference waveform may be incorporated into the signal processing unit 205 or the R*_{X}* waveform generator itself, or may be provided as a separate delaying unit coupled between the R*_{X}* waveform generator and the signal processing unit. The reference waveform is sent from the R*_{X}* generator 202 to the signal processing unit 205, which mixes the reference waveform with the received signal in order to deramp the received signal.

After deramping the received signal, a deramped signal is obtained which comprises the deramped echo signal (i.e. a tone signal) and the deramped leakage signal (i.e. a near-DC signal). The deramped echo signal and deramped leakage signal are both narrow-bandwidth repeating waveforms. The signal processing unit 205 is arranged to perform further processing on the deramped signal in order to cancel the near-DC leakage signal, and obtain the deramped echo signal. The deramped echo signal is sent to the distance calculating unit 206 and the velocity calculating unit 207, in order to calculate distance and velocity information about the object from which the echo signal 211 was received. Although in Fig. 2a the distance calculating unit 206 and the velocity calculating unit 207 are illustrated as separate units, in other embodiments the functionality may be combined into a single velocity and distance calculating unit.

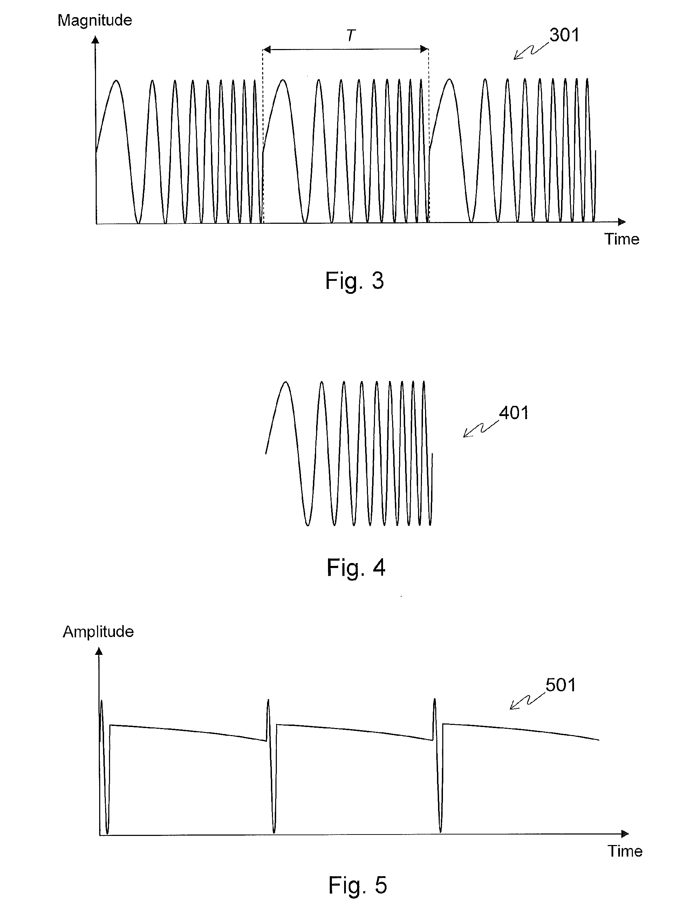

Referring now to Fig. 3, a received signal comprising an echo signal and a leakage signal is illustrated, according to an embodiment of the present invention. In the present embodiment, the echo signal is reflected from an object a large distance from the transmitter and receiver antennae. For example, the object may be at a distance of several kilometres from the radar system. As a result the echo signal is much lower in power than the leakage signal. The received signal 301 is therefore dominated by the leakage signal, and although the echo signal is present in the received signal 301 it is not discernible in Fig. 3.

In Fig. 3, a portion of the received signal is shown which comprises three repeating pulses. Each repeating pulse has a duration of T seconds, corresponding to the repeat period of the transmit signal. In the present embodiment, the pulses within the transmit signal repeat at a rate of 1 kHz, and hence the pulse width T equals 1 ms (cf. Fig. 2b). However, in other embodiments, other values may be used.

In the present embodiment, the signal processing unit is configured to process the received signal as a complex signal, comprising a real (in phase, "I") part and an imaginary (quadrature, "Q") part. The skilled person will be familiar with the principles of complex signal processing, and so a detailed description will be omitted here in order to maintain brevity. However, in brief, the signal processing unit comprises two cross-coupled signal paths, one for processing the real part (I) and one for processing the imaginary part (Q). The amplitude of the complex signal may be calculated as (I² + Q²)^{1/2}, and the phase of the complex signal may be calculated as tan⁻¹(Q\/I).

Referring now to Fig. 4, a reference waveform corresponding to the received signal of Fig. 3 is illustrated. The received signal is deramped by mixing with the reference waveform 401. Also, the reference waveform 401 is delayed with respect to the transmit signal. As described above with reference to Fig. 2a, this Rₓ delay is set such that during deramping, the leakage signal mixes down to a near-DC signal). That is, in comparison to the originally received signal, the deramped leakage signal is close to DC (i.e. having a frequency close to 0 Hz).

Therefore, when the reference waveform 401 is mixed with the received signal 301 during deramping, a near-DC deramped signal is obtained. This deramped signal may be filtered so as to remove unwanted mixer products. An example of such a deramped signal is illustrated in Fig. 5.

As shown in Fig. 5, the deramped signal 501 comprises a signal which is near-DC. That is, the deramped leakage signal comprises a repeating waveform having a frequency which is substantially lower than a frequency with which the waveform repeats (i.e. substantially lower than the transmit signal repetition frequency). Therefore within one repeat period of the deramped leakage signal, the signal level only varies slowly and the signal can be referred to as "near-DC". In Fig. 5 the deramped echo signal is present but is swamped by the deramped leakage signal, and hence the signal of Fig. 5 is dominated by the deramped leakage signal. The deramped signal 501 includes transients which correspond to the boundaries between consecutive repeat periods of the received signal 301. These transients may arise as a result of the reference waveform 401 not being precisely synchronised with the received signal 301 before mixing, and/or as a result of filter ringing arising due to the discontinuity in frequency at the boundaries between consecutive pulses.

In the present embodiment, the transients in the near-DC signal 501 of Fig. 5 are removed by blanking a portion of the signal spanning each boundary between pulses. The term "blanking" refers to a procedure by which the amplitude of the signal within a certain time period is set to zero.

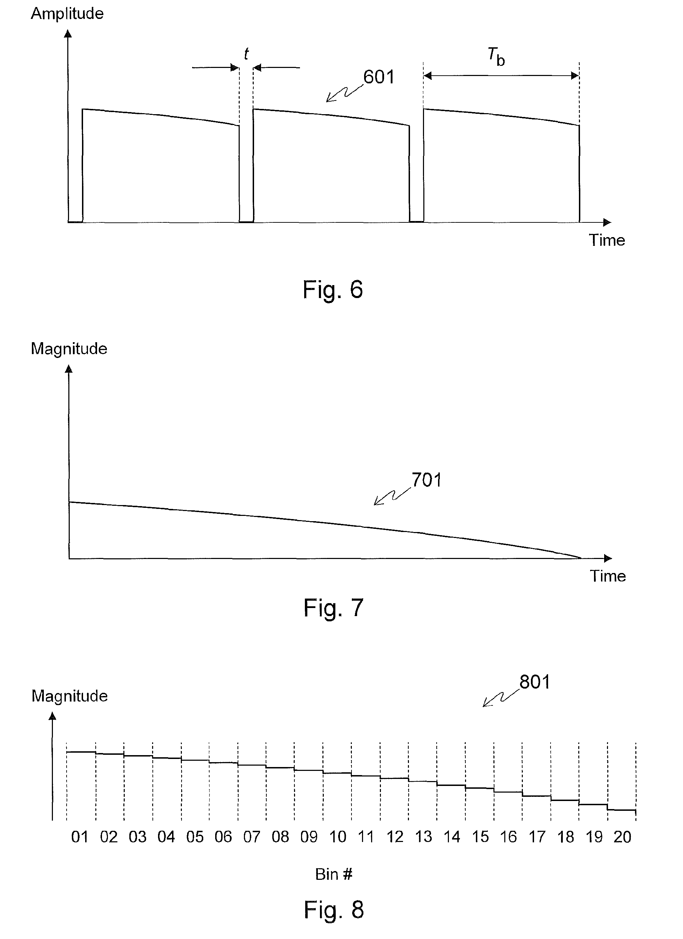

Referring now to Fig. 6, a blanked signal obtained by blanking the deramped signal of Fig. 5 is illustrated. The blanked signal 601 is obtained by blanking a portion of the deramped signal, within a window of width *t* seconds which spans each boundary between consecutive pulses. The result is the blanked signal 601 shown in Fig. 6, which comprises a plurality of pulses of width *T_{b}* seconds (*T_{b}* being less than the repeat period T of the received signal). Consecutive pulses within the blanked signal 601 are separated by zero-amplitude portions of duration *t* seconds, corresponding to the width of the blanking window.

The width of the blanking window may be predetermined, and is preferably configured so as to ensure that any possible transients will be caught and removed. As any information contained within the blanking window is lost during blanking of the signal, it is also desirable that the width of the blanking window be made as small as possible relative to the repeat period of the repeating waveform (i.e. the transmit signal). The width of the blanking window may therefore influence the choice of repeat period for the transmit signal, to ensure that only a small proportion of the received signal is discarded during blanking.

As shown in Fig. 6, each pulse within the blanked signal 601 does not have a flat profile (i.e. is not pure DC), but has a certain shape and slope. This is because the leakage signal deviates slightly from the reference waveform, due to such factors as non-linear response of the receiver filter. Therefore, when the leakage signal and reference waveform are mixed during deramping, the leakage signal does not completely mix down to DC. In the present embodiment, further processing is applied to the blanked signal in order to accurately cancel the deramped leakage signal in order to recover the deramped echo signal (i.e. the wanted portion of the deramped signal).

More particularly, once the blanked signal 601 is obtained, the system is arranged to generate a model waveform, which is continuously updated and configured such that when mixed with the blanked signal, the leakage signal is substantially cancelled. In the present embodiment, this leaves a residual signal which comprises the deramped echo signal. Details of this further processing will now be described with reference to Figs. 7 and 8.

Figure 7 illustrates a normalised waveform corresponding to the blanked signal of Fig. 6. In particular, the normalised waveform 701 corresponds to a single one of the pulses shown in Fig. 6, and has a length of *T_{b}* seconds (cf. Fig. 6). The normalised waveform is obtained as follows. Firstly, an average signal value for the blanked signal 601 is calculated. In the present embodiment, this comprises estimating a mean value of the real part (I) and a mean value of the imaginary part (Q) of the blanked signal 601 by calculating an exponential running average over many samples, spanning a plurality of repeat periods (i.e. a plurality of individual pulses). For example, the mean I value is determined by calculating an exponential running average of the I values for a plurality of repeat periods of the signal. Similarly, the mean Q value is determined by calculating an exponential running average of the Q values for a plurality of repeat periods of the signal. The exponential running average is calculated by applying a weighting to each data point, wherein the weighting decreases exponentially for older data points. However, in other embodiments, other types of running average may be used. Generally, any echo signal present will not be at 0Hz, and so its contribution will average to 0.

Secondly, once the mean values of I and Q have been calculated, the blanked signal is normalised by dividing by these mean values. In the present embodiment, since the received signal is processed as a complex signal, the blanked signal is normalised by performing a complex division. Also, since the received signal is converted into a digital signal by the ADC (cf. Fig. 2a), the blanked signal comprises a plurality of discrete samples. In the present embodiment, the signal is normalised on a sample-by-sample basis. Specifically, for each sample, the running average I and Q values are recalculated, and the sample is normalised by dividing by these updated values. In another embodiment of the present invention, the signal is normalised on a pulse-by-pulse basis, in which the mean I and Q values are updated after the entire pulse is received, with each sample within the pulse then being divided by the same mean I and Q values.

Next, the normalised signal 701 is used to update a model waveform, which is stored in a memory of the signal processing unit. Figure 8 illustrates a model waveform corresponding to the blanked signal 601 of Fig. 6. As shown in Fig. 8, the model waveform 801 is subdivided into a plurality of bins. In the present embodiment, about five hundred bins are used, with each bin corresponding to eight samples (i.e. each bin corresponds to a portion of the repeating waveform which is eight samples wide). In other embodiments, other arrangements may be used. For example, each bin may have a width corresponding to a plurality of data samples of the normalised signal 701 (as in the present embodiment), or may have a width corresponding to a single data sample of the normalised signal 701. Each bin is arranged to store normalised I and Q values from a plurality of pulses, and is further arranged to store a model I value and a model Q value. Each bin may correspond to a specific region of memory. In the present embodiment, the model values of I and Q are calculated by taking an exponential running average of the normalised I and Q values within that particular bin, so avoiding the need to store I and Q values from a plurality of pulses. That is, the exponential running average can be updated based only on the previous value of the average, and the new value to be included in the average. It is not necessary to separately store a large number of individual I and Q values over a plurality of repeat periods, as this information is already contained in the stored average value. However, in another embodiment a simple rolling mean may be used, in which case it will be necessary to store the individual values for a plurality of repeat periods in order that the mean can be recalculated each time it is updated.

As shown in Fig. 8, the model waveform 801 is defined by the model I and Q values stored within each bin. In the present embodiment, since the model values for each bin are calculated based on a running average over a plurality of pulses (i.e. a plurality of repeat periods of the received signal), the model waveform 801 effectively corresponds to a running average of the normalised signal over a plurality of pulses. Accordingly, the shape of the model waveform 801 is dominated by components of the blanked signal which share the same periodicity as the leakage signal. That is, the shape of the model waveform 801 corresponds to the deramped leakage signal. Therefore, the model waveform can effectively be used to filter out the leakage signal from the deramped signal. This process will now be described in more detail.

Once the model waveform 801 has been updated, the signal processing unit is arranged to scale the updated model waveform 801 to substantially match the current amplitude and phase of the signal (i.e. the deramped signal). The model waveform 801 is scaled by multiplying the I and Q values of the model waveform 801 by the mean I and Q of the blanked signal (i.e. the mean I and Q values which were used to normalise the blanked signal), using a complex multiply.

As noted above, the shape of the model waveform 801 closely matches the shape of the deramped leakage signal in the blanked signal (cf. Fig. 6). By scaling the model waveform 801 to match the current amplitude and phase of the blanked signal, the scaled model waveform 801 therefore closely matches the amplitude and phase of the leakage signal within the portion of the blanked signal which is currently being processed.

Finally, in order to recover the low-level wanted signal (i.e. the deramped echo signal) the scaled model waveform is subtracted from the blanked signal. Since the scaled model waveform matches the deramped leakage signal in both amplitude and phase, the leakage signal is effectively cancelled from the blanked signal. This leaves a low-level residual signal, which in the present embodiment comprises the deramped echo signal.

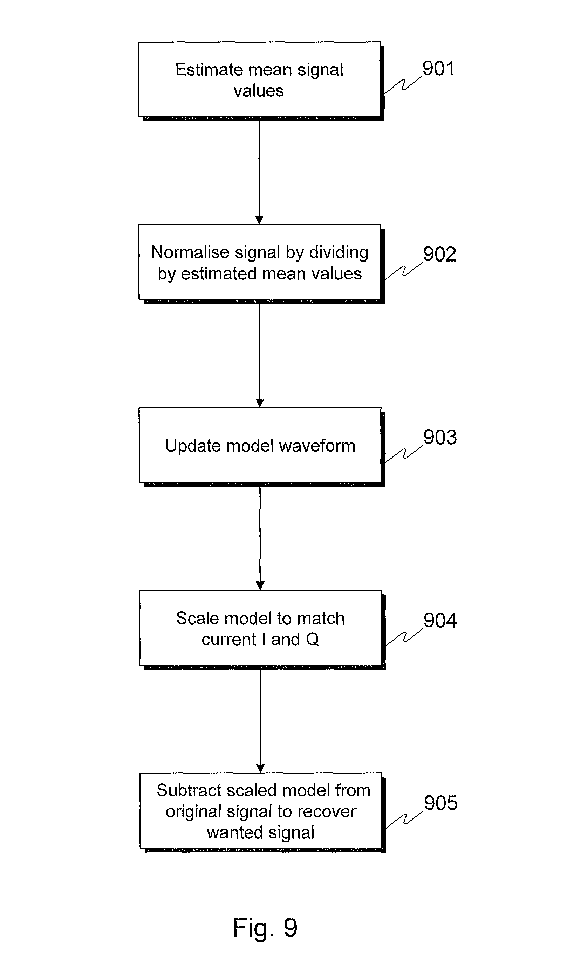

Referring now to Fig. 9, a flowchart is illustrated showing a method of processing a signal including a repeating waveform, according to an embodiment of the present invention. The method enables the repeating waveform (e.g. the deramped leakage signal) to be substantially cancelled so as to recover a low-level wanted signal. The method steps shown in Fig. 9 are similar to those described above with reference to Figs. 6 to 8, in relation to processing a blanked signal to recover a low-level deramped echo signal. As such, a detailed description of each method step will be omitted here, in order to maintain brevity.

In the first step 901, mean I and Q values of a signal are estimated. The signal comprises a signal which includes a repeating waveform, such as the blanked signal of Fig. 6. In the present embodiment, the mean I and Q values are calculated by taking an exponential running average over a plurality of repeat periods of the repeating waveform. In other embodiments, a different type of running average may be used. For example, the average I and Q values may be calculated using a weighted mean or an arithmetic mean over a predetermined number of repeat periods. In the second step 902, the signal is complex divided by the mean I and Q values so as to normalise the signal.

In the third step 903, a model waveform is updated using the signal values of the normalised signal obtained in the previous step 902. The model waveform may be similar to that described above with reference to Fig. 8, and as such, a detailed description will be omitted here.

In the fourth step 904, the updated model waveform is scaled to match the amplitude and phase of the original signal (i.e. the original input signal of the first step 901), by multiplying the updated model waveform by the mean I and Q values calculated in the first step 901.

Finally, in the fifth step 905, the scaled model waveform is subtracted from the original signal in order to recover a wanted portion of the original signal. When the method is used in a radar system embodiment such as that shown in Fig. 2a, the input signal at the first step 901 may correspond to a deramped signal (cf. Fig. 6), and the wanted portion of the deramped signal corresponds to the deramped echo signal. By continuously updating a model waveform which corresponds to a single repeat period of a leakage signal, and scaling this model to match the current amplitude and phase of the signal, the method may allow the leakage signal to be substantially filtered out (cancelled) from the deramped signal. Therefore, even when the radar system is operated at a long range from an object, such that the received echo signal would otherwise be obscured by the leakage signal, by employing a method such as the one shown in Fig. 9 the radar system may still be able to recover the deramped echo signal. In this way, the maximum operating range of a radar system according to an embodiment of the present invention may be significantly increased in comparison to a conventional continuous-wave radar system.

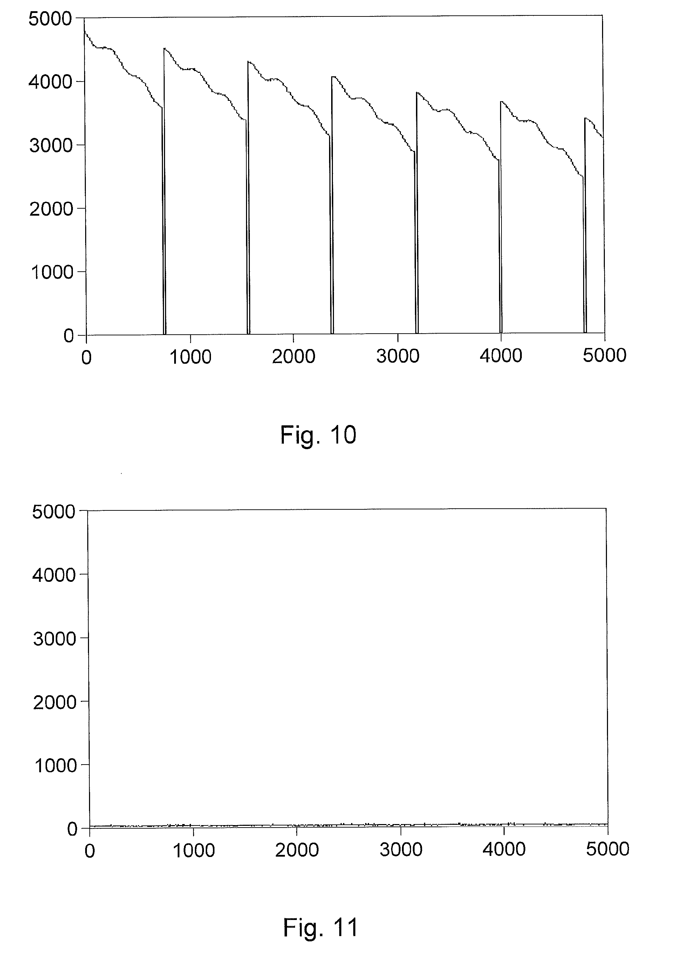

Figures 10 to 13 illustrate a series of waveforms obtained by computer simulations of a radar system employing the method shown in Fig. 9. In Figs. 10 to 13, the x-axes shows the current sample number, which effectively corresponds to elapsed time as samples are periodically generated. In Figs. 10 to 13, the sample rate is one sample every two microseconds, or 500 kHz. The y-axes show the number of counts, which is effectively a measure of amplitude.

Referring to Fig. 10, a cancelled deramped signal is illustrated according to an embodiment of the present invention. The cancelled deramped signal shown in Fig. 10 is obtained soon after activating the radar system, before the running average values of the mean signal model (i.e. the mean I and Q values) have converged on the actual current I and Q values. As such, the normalised model waveform is incorrectly scaled at first, and the leakage signal is not completely cancelled. This is because the mean I and Q values do not accurately reflect the current I and Q values at this stage. However, the model rapidly converges and is then able to effectively cancel the leakage signal. The steady decrease in amplitude from left to right is due to the mean I and Q values converging on the actual current values.

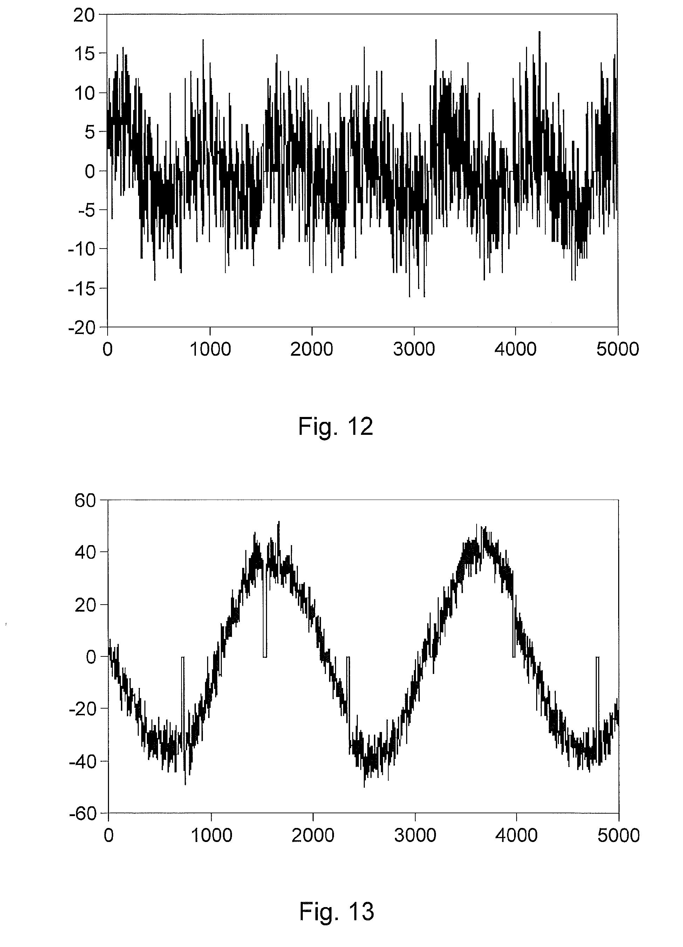

Figure 11 illustrates the cancelled deramped signal of Fig. 10, after the mean I and Q values have converged. At this point, the normalised model waveform is accurately rescaled to match the current signal amplitude and phase, and the leakage signal is substantially cancelled. Figure 12 illustrates the cancelled deramped signal of Fig. 11, but with the y-axis expanded to reveal the detail of the signal. As shown in Figs. 11 and 12, the signal processing method of the present embodiment effectively removes the leakage signal.

In the exemplary simulated residual signal of Figs. 10 to 12, no other signal is present, and so after cancelling the leakage signal the residual signal comprises only noise. Referring now to Fig. 13, a simulated residual signal is illustrated in which a deramped echo signal is present. As shown in Fig. 13, after cancelling out the leakage signal using the method shown in Fig. 9, the deramped echo signal is readily distinguished against any background noise. In comparison with the leakage signal originally present when the system is activated (cf. Fig. 10), in the present example the deramped echo signal has an amplitude which is about two orders of magnitude lower than the leakage signal. Therefore, without cancelling the leakage signal, the deramped echo signal would be obscured and the radar system would be unable to function. Hence in the present embodiment, a maximum operating range of the radar system can be significantly increased.

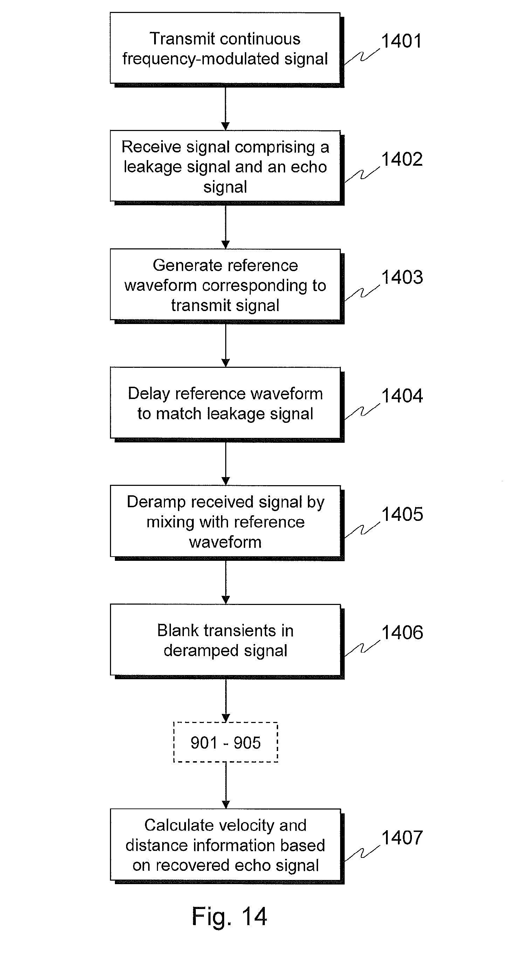

Referring now to Fig. 14, a method for cancelling a leakage signal to recover a low-level echo signal in a radar system is illustrated, according to an embodiment of the present invention. Many of the steps are similar to those already described above with reference to Figs. 2a to 8, and as such, a detailed description will be omitted here in order to maintain brevity.

In the first step 1401, a frequency-modulated continuous signal is transmitted. The transmit signal may be similar to the one illustrated in Fig. 2b. Next, in the second step 1402, a signal is received which comprises both an echo signal and a leakage signal (cf. the leakage signal 212 and echo signal 211 of Fig. 2a). The received signal may be similar to the one illustrated in Fig. 3. In the third step 1403, a reference waveform corresponding to the original transmit signal is generated. The reference waveform may be similar to the one illustrated in Fig. 4.

Next, in the fourth step 1404, the timing of the reference waveform is adjusted to match the leakage signal. That is, the reference waveform is delayed to compensate for a characteristic internal delay of the system, which may be determined during calibration as discussed above.

In the fifth step 1405, the received signal is deramped by mixing with the reference waveform so as to obtain a deramped signal. The deramped signal obtained during this step may be similar to the one shown in Fig. 5. Then, in the sixth step 1406, any transients occurring in the deramped signal are blanked, to produce a blanked signal (which may be similar to the one illustrated in Fig. 6).

The blanked signal is then further processed according to the method steps 901-905 of Fig. 9, to substantially cancel the leakage signal. Following this further processing, a residual signal is obtained which comprises the deramped echo signal. Finally, in the seventh step 1407, the radar system analyses the recovered deramped echo signal in order to calculate velocity and distance information about an object from which the echo signal is received.

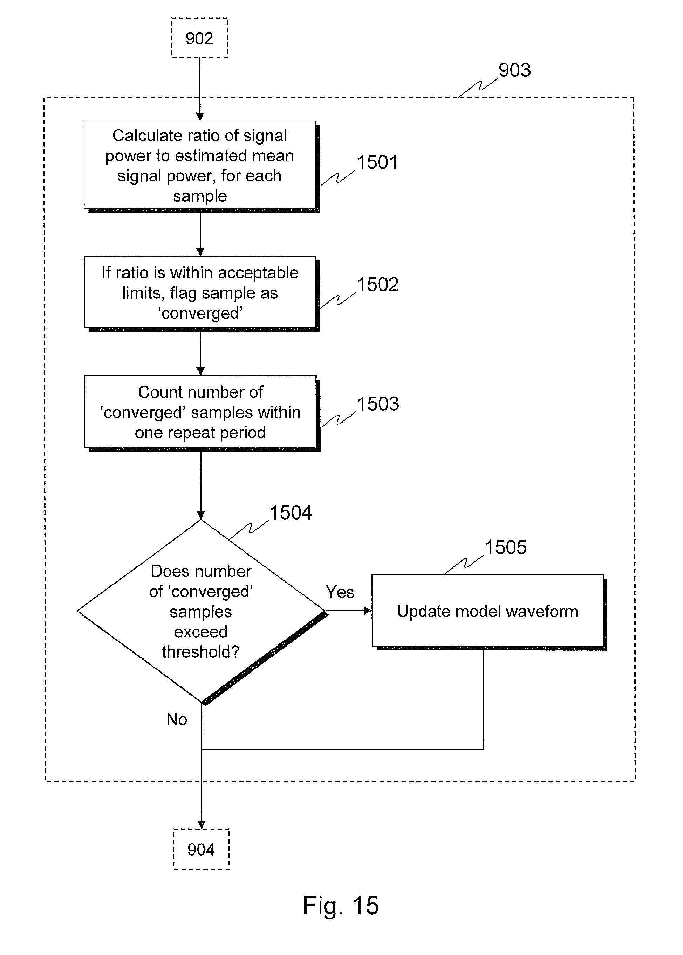

Referring now to Fig. 15, a method for determining whether to update a model waveform is illustrated, according to an embodiment of the present invention. The method comprises additional steps which may be incorporated into the third step of the method of Fig. 9, in some embodiments of the present invention.

Specifically, in the third step 903 of Fig. 9, a model waveform is updated using I and Q values from a normalised signal. In the present embodiment illustrated in Fig. 15, updating of the model waveform is conditional on certain criteria being fulfilled. In more detail, in the first step 1501 of Fig. 15, a ratio is calculated of current signal power to the estimated mean signal power for each sample (i.e. each data point) within the input signal (e.g. the blanked signal). The current signal power is calculated as I² + Q² using the actual I and Q values of the current sample. The estimated mean signal power is calculated as I² + Q² using the mean values of I and Q (i.e. the values calculated during step 901 of Fig. 9).

In the second step 1502, it is determined whether or not the ratio falls within predetermined acceptable limits. In the present embodiment, the ratio is said to fall within acceptable limits if it lies within a predefined range of 1. If a sample falls within the acceptable limits, it is flagged as "converged". If the sample falls outside of the limits, it is not flagged, or is flagged as "unconverged".

Next, in the third step 1503, the number of "converged" samples within a repeat period of the received signal is counted. Then, in the fourth step 1504, the number of converged samples is compared against a predefined threshold value, in order to determine whether or not to update the model waveform. That is, the system is arranged to wait until all samples within a particular repeat period (i.e. a single pulse) have been analysed in the first and second steps 1501, 1502, before determining whether or not to update the model waveform. If the number of converged samples is less than the threshold value (i.e. if an insufficient number of samples within the repeat period are converged), then the system proceeds directly to the fourth step 904 of Fig. 9 without updating the model. Alternatively, if the number of converged samples is greater than or equal to the threshold value, the system proceeds to the fifth step 1505 and updates the waveform (cf. the third step 903 of Fig. 9), and then continues to the fourth step of Fig. 9 as before.

The method of Fig. 15 may be particularly advantageous in situations where the amplitude of the leakage signal is liable to change rapidly, for example due to a sudden change in environmental conditions which affects the amplitude of the signal reaching the receiver (e.g. if the transmitter-receiver distance is liable to change suddenly). By comparing the instantaneous signal power to a power calculated based on a running average, a sudden change in the nature of the received signal can be detected. Because the normalised signal is calculated using the mean signal I and Q values (calculated using a running average), when there is a sudden change in amplitude of the received signal, the normalised signal may deviate significantly from the required normalised level, i.e. the level which is stored in the model waveform. The method of Fig. 15 achieves the effect that the system is made to wait until the running average I and Q values have 'caught up' with the current signal I and Q values. At this point, the signal will once again be correctly normalised, and updating of the model waveform can resume.

Whilst certain embodiments of the invention have been described above, it will be clear to the skilled person that many variations and modifications are possible while still falling within the scope of the invention as defined by the claims. Any feature of any embodiment described may be used in combination with any feature of a different embodiment.

For example, embodiments of the present invention have been described in which the model waveform comprises a plurality of bins, storing I and Q values over a plurality of repeat periods. The model I and Q values may correspond to average values of the deramped signal over a plurality of repeat periods of the repeating waveform. In one embodiment described above, the average used is a type of mean, specifically an exponential running average. However, in other embodiments, a different type of average may be substituted. For example, in certain situations, a simple moving median may be more appropriate.

In other embodiments, instead of being subdivided into a plurality of bins, the model waveform may comprise an equation whose parameters are continuously modified to provide a closer fit to the pulse currently being processed. In this case, the model may still correspond to an average form of the deramped signal over a plurality of repeat periods of the repeating waveform, even though an average is not explicitly calculated. Such embodiments may be particularly suitable in cases where the normalised waveform has a well-defined, regular shape (e.g. parabolic) which can readily be described by an equation (e.g. a polynomial).

Also, embodiments of the present invention have been described in which a deramped signal is normalised before updating the model waveform. However, in other embodiments the normalisation step may be omitted, for example when the leakage signal and echo signal remain substantially constant in power during use of the radar system. In such embodiments the step of scaling the model waveform will also be omitted.

Furthermore, embodiments of the present invention have been described in which the received signal is deramped by mixing with a copy of the transmit signal. The purpose of deramping is to convert the leakage signal to a near-DC signal and to obtain a tone from the echo signal. The tone can be analysed to obtain information about an object. However, in other embodiments, this conversion of the received signal may be achieved by a method other than deramping.

## Claims

1. A method of processing a received signal in a radar system, the received signal including an echo signal reflected from an object and a leakage signal, the leakage signal comprising a portion of a transmit signal which travels directly from a transmitter of the radar system to a receiver of the radar system, the method comprising:
converting the received signal so that the echo and leakage signals are converted to repeating waveforms, a frequency of the repeating leakage waveform being less than a repetition frequency of the transmit signal;
generating a model of the repeating leakage waveform, based on values of the converted received signal over a plurality of repeat periods of the repeating leakage waveform;
generating a signal based on the model; and
subtracting (905) the signal based on the model from the converted received signal to cancel the repeating leakage waveform.

2. The method of claim 1, further comprising:
normalising the converted received signal, prior to generating the model; and
scaling the model according to a continuously averaged value of the converted received signal, prior to subtracting the signal based on the model from the converted received signal.

3. The method of claim 1 or 2, wherein the model comprises a plurality of bins, each bin storing a model value corresponding to a different portion of the repeating leakage waveform.

4. The method of claim 3, wherein each model value is an exponential running average of values of corresponding portions of the converted received signal over a plurality of repeat periods of the repeating leakage waveform, and
wherein generating the model comprises updating each model value by recalculating the exponential running average based on a current value of a corresponding portion of the converted received signal.

5. The method of any one of the preceding claims, further comprising:
comparing a current power of the converted received signal to an estimated mean power of the converted received signal; and
determining (1504) whether to update the model based on the result of said comparison.

6. The method of claim 5, wherein comparing a current power of the converted received signal to an estimated mean power of the converted received signal comprises calculating a ratio of the current power to the estimated mean power, and
wherein determining whether to update the model comprises determining whether said ratio is within a predetermined acceptable range.

7. The method of claim 6, wherein determining whether to update the model comprises counting a number of samples that lie within said predetermined acceptable range for a single repeat period of the repeating leakage waveform, and updating the model if said number of samples exceeds a threshold value.

8. The method of claim 5, 6 or 7, wherein the estimated mean power is calculated as a mean power of the converted received signal over a plurality of repeat periods of the repeating leakage waveform.

9. The method of any one of the preceding claims, wherein converting the received signal comprises deramping the received signal by mixing the received signal with a copy of the transmit signal.

10. The method of any one of the preceding claims, wherein the repeating leakage waveform has a frequency close to 0 Hz, and has a repetition frequency which is the same as the repetition frequency of the transmit signal.

11. The method of any one of the preceding claims, wherein the converted leakage signal and the converted echo signal each have a constant frequency.

12. Apparatus (205) for processing a received signal in a radar system, the received signal including an echo signal reflected from an object and a leakage signal, the leakage signal comprising a portion of a transmit signal which travels directly from a transmitter of the radar system to a receiver of the radar system, the apparatus comprising:
means for converting the received signal so that the echo and the leakage signals are converted to repeating waveforms, a frequency of the repeating leakage waveform being less than a repetition frequency of the transmit signal; and
signal processing means configured to generate a model of the repeating leakage waveform, based on values of the converted received signal over a plurality of repeat periods of the repeating leakage waveform, generate a signal based on the model, and subtract the signal based on the model from the converted received signal to cancel the repeating leakage waveform.

13. The apparatus of claim 12, wherein the signal processing means is further configured to normalise the converted received signal prior to generating the model, and scale the signal based on the model according to a current value of the converted received signal.

14. A radar system comprising:
the apparatus of claim 12 or 13;
a transmitter (208) configured to continuously transmit a transmit signal; and a receiver (209) configured to receive a signal including an echo signal and a leakage signal, the echo signal comprising a portion of the transmitted signal which is reflected from an object, and the leakage signal comprising a portion of the transmit signal which travels directly from the transmitter to the receiver.

15. The radar system of claim 14, further comprising means (206, 207) for calculating velocity and/or distance information (1407) about the object, after subtracting the signal based on the model from the converted received signal.
